(19) Europäisches Patentamt
European Patent Office
Office européen des brevets

(11) Veröffentlichungsnummer: **0 501 424 A1**

(12) **EUROPÄISCHE PATENTANMELDUNG**

(21) Anmeldenummer: **92103191.0**

(51) Int. Cl.5: **C08F 220/24**, G02B 1/04

(22) Anmeldetag: **25.02.92**

(30) Priorität: **26.02.91 DE 4105951**

(43) Veröffentlichungstag der Anmeldung:
**02.09.92 Patentblatt 92/36**

(84) Benannte Vertragsstaaten:
**DE FR GB IT SE**

(71) Anmelder: **HOECHST AKTIENGESELLSCHAFT**
**Postfach 80 03 20**
**W-6230 Frankfurt am Main 80(DE)**

(72) Erfinder: **Groh, Werner, Dr.**
**Dieulefiter Strasse 7**
**W-6302 Lich(DE)**
Erfinder: **Heumüller, Rudolf, Dr.**
**Strandpromenade 3**
**W-6054 Rodgau 3(DE)**
Erfinder: **Schütze, Gerald, Dr.**
**Ubierstrasse 13**
**W-6238 Hofheim am Taunus(DE)**
Erfinder: **Stern, Roland, Dr.**
**Dantestrasse 10**
**W-6200 Wiesbaden(DE)**
Erfinder: **Wieners, Gerhard, Dr.**
**Glauburgstrasse 87**
**W-6000 Frankfurt am Main 1(DE)**

(54) **Transparente thermoplastische Formmasse, Verfahren zu ihrer Herstellung und ihre Verwendung.**

(57) Transparente thermoplastische Formmasse, aus einem Polymeren enthaltend

a) 10 bis 95 Gew.-% an Einheiten, die sich von einer Verbindung der Formel (I) ableiten

$R^1{}_2C=CF\text{-}COO\text{-}C(CF_3)_2R^2$ (I)

b) 90 bis 5 Gew.-% an Einheiten, die sich von einer oder mehreren Verbindungen der Formel (II) ableiten, und

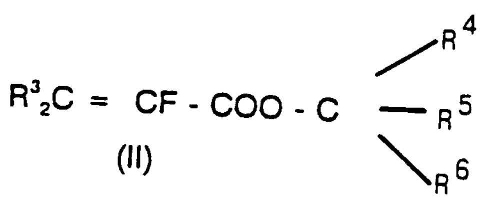

(II)

c) 0 bis 85 Gew.-% an Einheiten, die sich von einer Verbindung der Formel (III) ableiten

$R^7{}_2C = CF - COO - CR^8{}_3$ (III)

Die Formmasse wird zur Herstellung von optischen Gegenständen, insbesondere zur Herstellung von Lichtwellenleitern verwendet.

EP 0 501 424 A1

Ester der 2-Fluoracrylsäure, insbesondere aromatische Ester, sowie Polymere aus diesen Verbindungen, die sich durch hohe Glastübergangstemperaturen auszeichnen, sind in der Literatur beschrieben (DE-B-29 50 491). Die Lichttransmission dieser Polymere ist jedoch aufgrund hoher Lichtstreuungs- und Absorptionsbeiträge sehr niedrig. Ferner sind optische Materialien bekannt, die aus polymeren 2-Fluoracrylsäureestern, insbesondere Estern aliphalischer Alkohole, welche sowohl in der Alkoholkomponente als auch in der $\beta$-Stellung der 2-Fluoracrylsäurekomponente Deuteriumatome enthalten können (EP-A-128 517) bestehen. Die beschriebenen Polymere weisen Brechungsindices zwischen 1,45 und 1,60 sowie Glasübergangstemperaturen zwischen 100 und 200 ° C auf und dienen als Kernmaterialien für Lichtwellenleiter (polymere optische Fasern (POF's)). Als Mantelmaterialien werden polymere 2-Fluoracrylsäureester fluorhaltiger Alkohole eingesetzt.

Ebenfalls bekanntist die Herstellung von Poly (2-fluor-acrylsäurefluoralkylestern) (EP-A 128 516).

Die Polymere werden durch radikalisch initiierte Polymerisation der Monomere in Masse, Lösung oder Suspension in Gegenwart eines Kettenübertragungsmittels bei einer Temperatur zwischen 0 und 100 ° C hergestellt. Sie weisen Brechungsindices zwischen 1,36 bis 1,44 und Erweichungstemperaturen zwischen 80 und 140 ° C auf.

Des weiteren bekannt sind Homo-und Copolymere, die 2-Fluoracrylsäurehexafluorisopropylester enthalten, welche zur Herstellung von transparenten Gegenständen verwendet werden (EP-B-203 402). Glasübergangstemperaturen für das Homopolymere werden mit 108 ° C, für Copolymere aus dem Hexafluorisopropylester und dem Methylester in den Gewichtsverhältnissen 45 : 55,66 : 34,79 : 21 mit 140, 142 und 133 ° C angegeben. Copolymere mit einem hohen Gehalt an dem Methylester (55 bzw. 34 Gew.-Teile des Methylesters) weisen hohe Glasübergangstemperaturen, aber auch hohe Brechungsindices auf. Ihre Lichtdurchlässigkeit ist jedoch wegen der im Polymeren verhandenen Kohlenstoff-Wasserstoff-Bindungen und der durch diese bedingten hohen Absorptionsbeiträge, unzureichend.

So kann die Lichtdurchlässigkeit von Polymeren durch eine Erhöhung des Gehaltes an Hexafluorisopropylester (79 bzw. 100 Gew.-%) zwar gesteigert werden, was jedoch ein Absinken der Glasübergangstemperatur zur Folge hat, so daß diese für viele Anwendungsbereiche von polymeren Lichtwellenleitern nicht mehr ausreichend ist.

Die Aufgabe der Erfindung war, es ein Polymer aus leicht zugänglichen Monomeren bereit zu stellen, welches zugleich eine hohe Lichtdurchlässigkeit im Wellenlängenbereich des sichtbaren Lichtes und eine hohe Glasübergangstemperatur aufweist und sich ferner zu einer thermoplastischen Formmasse und zu Lichtwellenleitern verarbeiten läßt, die für hohe Übertragungslängen sowie hohe Dauergebrauchstemperaturen geeignet sind.

Die Erfindung betrifft somit eine transparente, thermoplastische Formmasse bestehend aus einem Polymeren enthaltend

a) 10 bis 95 Gew.-% an Einheiten, die sich von einer Verbindung der Formel (I) ableiten

$$R^1{}_2C = CF - COO - C(CF_3)_2 R^2 \quad (I)$$

worin $R^1$ und $R^2$ gleich oder verschieden sind und ein Wasserstoff-, Deuterium- oder Fluoratom bedeuten.

b) 90 bis 5 Gew.-% an Einheiten, die sich von einer oder mehreren Verbindungen der Formel (II) ableiten

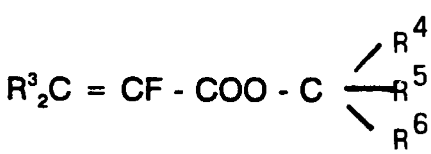

(II)

worin

$R^3$ ein Wasserstoff- oder Deuteriumatom ist,

$R^4$ und $R^5$ gleich oder verschieden sind und ein Wasserstoff-, oder Deuteriumatom, eine Methyl- oder Mono-, Di- oder Trideuteromethylgruppe oder eine Trifluor- oder Trichlormethylgruppe bedeuten und

$R^6$ eine Methyl-, oder Mono-, Di- oder Trideuteromethyl- oder Trifluormethylgruppe, eine Phenylgruppe, eine Pentafluorphenylgruppe, eine Mono-, Di- oder Trihalogenphenylgruppe, eine Mono-, Di- oder Tri-(perfluor-$C_1$ bis $C_3$-alkyl)-phenylgruppe oder eine $CH_3$-$CHF$-$CF_2$-$CH_2$-Gruppe, eine$(CF_3)_3C$-Gruppe oder

eine $X-(CF_2)_n-(CH_2)_m$-Gruppe, in der X für ein Wasserstoff-, Deuterium-, Fluor-oder Chloratom steht und n eine ganze Zahl von 2 bis 4 und m gleich 0 oder 1 ist, bedeutet,

c) 0 bis 85 Gew.-% an Einheiten, die sich von einer Verbindung der Formel (III) ableiten

$$R^7{}_2C = CF - COO - CR^8{}_3 \quad \text{(III)}$$

worin $R^7$ und $R^8$ gleich oder verschieden sind und ein Wasserstoff- oder Deuteriumatom bedeuten, wobei die Summe von (II) und (III), bezogen auf die Gesamtmenge des Polymers, im Bereich von 5 bis 90 Gew.-% liegt.

Die erfindungsgemäße Formmasse enthält zu (a) 10 bis 95 Gew.-%, bevortugt zu 40 bis 95 Gew.-%, besonders bevorzugt zu 50 bis 90 Gew.-% Einheiten, die sich von einer Verbindung der Formel I ableiten. $R^1$ und $R^2$ sind dabei gleich oder verschieden und bedeuten ein Wasserstoff-, Deuterium- oder Fluoratom, $R^1$ bevortugt ein Deuteriumatom. Besonders bevorzugt stellen Verbindungen der Formel (I) 2-Fluoracrylsäure-hexafluorisopropylester-$d_3$ dar.

Weiterhin enthält die Formmasse zu (b)90 bis 5 Gew.-%, vorzugsweise zu 60 bis 5 Gew.-%, besonders bevorzugt zu 50 bis 10 Gew.-% Einheiten die sich von einer oder mehreren Verbindungen der Formel (II) ableiten wobei $R^3$ ein Wasserstoff- oder Deuteriumatom, vorzugsweise ein Deuteriumatom ist;
$R^4$ und $R^5$ gleich oder verschieden voneinander sind und für ein Wasserstoff- oder Deuteriumatom, eine Methyl- oder Mono-, Di-oder Trideuteromethylgruppe oder eine Trifluor- oder Trichlormethylgruppe, insbesondere für ein Wasserstoff- oder Deuteriumatom oder eine Methyl- oder Trideuteromethyl oder Trifluormethylgruppe stehen;
$R^6$ eine Methylgruppe eine Mono-, Di- oder Trideuteromethylgruppe, eine Trifluormethylgruppe, eine Phenylgruppe, eine Pentafluorphenylgruppe, eine Mono-, Di- oder Trihalogenphenylgruppe, eine Mono-, Di- oder Tri(perfluor- $C_1$ bis $C_3$ - alkyl)phenylgruppe, eine $(CF_3-CHF-CF_2-CH_2)$-Gruppe, eine $(CF_3)_3C$-Gruppe oder eine $X-(CF_2)_n-(CH_2)_m$-Gruppe, in der X für ein Wasserstoffatom, ein Deuteriumatom, ein Fluoratom oder ein Chloratom steht, n gleich 2, 3 oder 4 und m gleich 0 oder 1 sein kann, insbesondere jedoch eine Methyl-, Mono-, Di- oder Trideuteromethyl-, Trifluormethyl-, Trichlormethyl-, Pentafluor-n-propyl-, 2,2,3,3-Tetrafluor-n-propyl, 2, 2, 3, 3-Tetrafluor-n-propyl-$d_3$-oder eine Perfluor-tert.-butylgruppe bedeutet und gegebenfalls zu (c) 0 bis 85 Gew.-%, vorzugsweise 0 bis 65 Gew.-%, besonders bevorzugt zu 0 bis 45 Gew.-% aus Einheiten, die sich von einer Verbindung der Formel III ableiten, besteht. In der Formel (III) sind $R^7$ und $R^8$ gleich oder verschieden und stehen für ein Wasserstoff- oder Deuteriumatom, vorzugsweise ein Deuteriumatom. Die Gewichtsanteile der Verbindungen der Formeln (II) und (III) addieren sich, bezogen auf die Gesamtmenge des Polymers, zu 5 bis 90 Gew.-%, vorzugsweise zu 5 bis 60 Gew.-%, insbesondere bevorzugt zu 10 bis 50 Gew.-%.

Die erfindungsgemäße thermoplastische Formmasse enthält beispielsweise folgende Verbindungen der Formel (II):
2-Fluoracrylsäure-ethylester,
2-Fluoracrylsäure-trifluorethylester,
2-Fluoracrylsäure-trichlorethylester,
2-Fluoracrylsäure-pentafluorpropylester,
2-Fluoracrylsäure-tetrafluorpropylester
2-Fluoracrylsäure-isopropylester,
2-Fluoracrylsäure-trifluorisopropylester
2-Fluoracrylsäure-perfluorisopropylester,
2-Fluoracrylsäure-perfluor(-2,3-dimethyl-2-butyl)ester,
2-Fluoracrylsäure-trifluor-tert.-butylester,
2-Fluoracrylsäure-trichlor-tert.-butylester,
2-Fluoracrylsäure-$d_2$-ethylester,
2-Fluoracrylsäure-$d_2$-trifluorethylester,
2-Fluoracrylsäure-$d_2$-trichlorethylester,
2-Fluoracrylsäure-$d_2$-pentafluorpropylester,
2-Fluoracrylsäure-$d_2$-tetrafluorpropylester,
2-Fluoracrylsäure-$d_2$-isopropylester,
2-Fluoracrylsäure-$d_2$-trifluorisopropylester,
2-Fluoracrylsäure-$d_2$-perfluorisopropylester,
2-Fluoracrylsäure-$d_2$-perfluor(-2,3 dimethyl-2-butyl)ester
2-Fluoracrylsäure-$d_2$-trifluor-tert.-butylester,
2-Fluoracrylsäure-$d_2$-trichlor-tert.-butylester,

2-Fluoracrylsäure-ethylester-$d_7$,
2-Fluoracrylsäure-trifluorethylester-$d_4$,
2-Fluoracrylsäure-trichlorethylester-$d_4$,
2-Fluoracrylsäure-pentafluorpropylester-$d_4$,
2-Fluoracrylsäure-tetrafluorpropylester-$d_5$,
2-Fluoracrylsäure-isopropylester-$d_8$,
2-Fluoracrylsäure-isopropylester-$d_9$
2-Fluoracrylsäure-isopropylester-$d_9$
2-Fluoracrylsäure-trifluorisopropylester-$d_6$
2-Fluoracrylsäure-trifluor-tert.-butylester-$d_8$,
2-Fluoracrylsäure-trichlor-tert.-butylester-$d_8$.

Besonders bevorzugt eingesetzte Verbindungen der Formel (II) sind:
2-Fluoracrylsäure-ethylester-$d_7$,
2-Fluoracrylsäure-trifluorethylester-$d_4$,
2-Fluoracrylsäure-trichlorethylester-$d_4$,
2-Fluoracrylsäure-pentafluorpropylester-$d_4$,
2-Fluoracrylsäure-tetrafluorpropylester-$d_5$,
2-Fluoracrylsäure-isopropylester-$d_8$,
2-Fluoracrylsäure-trifluorisopropylester-$d_6$,
2-Fluoracrylsäure-isopropylester-$d_9$,
2-Fluoracrylsäure-$d_2$-perfluor-(2,3-dimethyl-2-butyl)ester
2-Fluoracrylsäure-trifiuor-tert.-butylester-$d_8$,
2-Fluoracrylsäure-trichlor-tert.-butylester-$d_8$.

In den Einheiten der Formel III bedeutet $R^7$ bevortugt ein Deuteriumatom und $R^8$ ein Wasserstoffatom oder ein Deuteriumatom. Insbesondere enthalten die Formmassen 2-Fluoracrylsäure-methylester-$d_5$.

Die Formmasse enthält also bevorzugt
2-Fluoracrylsäurehexafluorisopropylester-$d_2$ oder
2-Fluoracrylsäurehexafluorisopropylester-$d_3$, und einer oder mehrere Verbindungen aus der Gruppe
2-Fluoracrylsäure-$d_2$-ethylester,
2-Fluoracrylsäure-$d_2$-trifluorethylester,
2-Fluoracrylsäure-$d_2$-trichlorethylester,
2-Fluoracrylsäure-$d_2$-pentafluorpropylester,
2-Fluoracrylsäure-$d_2$-tetrafluorpropylester,
2-Fluoracrylsäure-$d_2$-isopropylester,
2-Fluoracrylsäure-$d_2$-trifluorisopropylester,
2-Fluoracrylsäure-$d_2$-perfluorisopropylester,
2-Fluoracrylsäure-$d_2$-perfluor-(2,3-dimethyl-2-butyl)ester
2-Fluoracrylsäure-$d_2$-trifluor-tert.-butylester,
2-Fluoracrylsäure-$d_2$-trichlor-tert.-butylester,
2-Fluoracrylsäure-ethylester-$d_7$,
2-Fluoracrylsäure-trifluorethylester-$d_4$,
2-Fluoracrylsäure-trichlorethylester-$d_4$,
2-Fluoracrylsäure-pentafluorpropylester-$d_4$,
2-Fluoracrylsäure-tetrafluorpropylester-$d_5$,
2-Fluoracrylsäure-isopropylester-$d_8$,
2-Fluoracrylsäure-isopropylester-$d_9$,
2-Fluoracrylsäure-trifluorisopropylester-$d_6$,
2-Fluoracrylsäure-trifluor-tert.-butylester-$d_8$,
2-Fluoracrylsäure-trichlor-tert.-butylester-$d_8$, sowie gegebenenfalls aus
2-Fluoracrylsäuremethylester-$d_2$ oder
2-Fluoracrylsäuremethylester-$d_5$.

Zusätzlich kann die Formmasse gegebenenfalls Einheiten enthalten, die sich von Verbindungen ableiten, welche mit den Monomeren der Formel I, der Formel II und der Formel III copolymerisierbar sind.

Die Monomere der Formeln I, II und III sind insbesondere auch noch mit anderen Vinylverbindungen copolymerisierbar. Solche besonders geeigneten Vinylverbindungen sind $C_1$ bis $C_6$ Alkylester der Acryl- und der Methacrylsäure, insbesondere Methylmethacrylat und Methylmethacrylat-$d_8$, wie auch Styrol, Styrol-$d_8$, Styrol-$d_5$, Pentafluorstyrol, Vinylchlorid und Vinylacetat.

Das Gewichtsverhaltnis der Monomeren der Formeln I, II und III zu den als Comonomeren eingesetzten

anderen Vinylverbindungen kann beispielsweise 60:40, bis 99:1, vorzugsweise 80:20 bis 99:1 betragen.

Die erfindungsgemäßen Formmassen können auch untereinander oder mit anderen polymeren Formmassen gemischt eingesetzt werden. Die Herstellung kann nach den an sich bekannten Verfahren erfolgen, beispielsweis durch Suspension-, Emulsions-, Fällungs- oder Massepolymerisation. Vorzugsweise wird die Polymerisation in Masse mit Hilfe eines oder mehrerer radikalisch wirksamer Initiatoren durchgeführt. Geeignete Initiatoren sind beispielsweise Azoverbindungen wie Azobisisobutyronitril, Azo- bis (2,4,4-trimethylpentan-2), Azo-bis-tert.-butan und organische Peroxide wie Dicumylperoxid, tert.-Butylperoxid, tert.-Butylperoctoat, tert.-Butylperoxiisopropylcarbonat, tert.-Butylhydroperoxid und tert.-Butylperoxiisobutyrat.

Die Menge des Initiators liegt im Bereichvon 0,001 bis 3, vorzugsweise 0,001 bis 0,3 mol pro 100 mol der Monomere.

Vorteilhaft ist die Durchführung der Polymerisation in Gegenwart eines Kettenübertragungsmittels (Reglers.) Hierfür eigenen sich besonders Merkaptane wie Butylmerkaptan, tert.-Butylmerkaptan, Propylmerkaptan, Dodecylmerkaptan, Butandithiol, Pentandithiol, Phenylmerkaptan, Pentafluorphenylmerkaptan, tert.-Hexylmerkaptan sowie Ester der Merkaptoessigsäure, z.B. Ethylmerkaptoacetat und Ethylenglykolbis-(merkaptoacetat).

Die Polymerisationstemperatur beträgt 20 bis 180 ° C, vorzugsweise 50 bis 150 ° C, besonders bevorzugt 80 bis 140 ° C.

Die Formmasse entsteht in Form einer glasklaren Masse die thermoplastisch verformbar ist. Die erfindungsgemäße Formmasse weist hohe Glasübergangstemperaturen auf, die über 120 ° C, insbesondere über 130 ° C, besonders bevorzugt im Bereich von 140 ° C bis 170 ° C liegen, und somit überraschenderweise sogar zum Teil die Glasübergangstemperaturen sowohl des Homopolymeren, das sich von Monomereinheiten der Formel I, als auch des Homopolymeren, das sich von Monomereinheiten der Formel II ableitet, übertreffen.

Aus der Formmasse können optische Gegenstände, insbesondere Lichtwellenleiter, vorzugsweise Lichtwellenleiter mit Kern/Mantel-Struktur hergestellt werden. Die Lichtwellenleiter können die erfindungsgemäße Formmasse sowohl im Kern als auch im Mantel enthalten. Bei der Auswahl von Kern- und Mantelmaterial ist zu beachten, daß mimale Übertragungslängen für Lichtsignale in tichtwellenleitern dann erreicht werden, wenn die Brechungsindices des Kernmaterials n (K) und des Mantelmaterials n (M) eines Lichtwellenleiters folgende Gleichungen erfüllen

$$\frac{n\,(K)}{n\,(M)} > 1{,}01$$

In einer bevorzugten Ausführungsform werden als Kernmaterialien solche Copolymere eingesetzt, die Monomereinheiten der Formeln I, III und III enthalten, insbesondere in denen $R^1$, $R^3$ und $R^7$ Deuteriumatome bedeuten. Besonders bevorzugt werden Copolymere, die Monomereinheiten der Formeln I und II enthalten, in denen $R^1$, $R^2$ und $R^3$ sowie $R^7$ und $R^8$ Deuteriumatome bedeuten. Ebenfalls besonders bevorzugt werden Copolymere, die Monomereinheiten der Formel I, in denen $R^1$ und $R^2$ ein Deuteriumatom bedeuten und eine oder mehrere der folgenden Verbindungen

2-Fluoracrylsäure-ethylester-$d_7$,
2-Fluoracrylsäure-trifluorethylester-$d_4$,
2-Fluoracrylsäure-trichlorethylester-$d_4$,
2-Fluoracrylsäure-pentafluorpropylester-$d_4$,
2-Fluoracrylsäure-tetrafluorpropylester-$d_5$,
2-Fluoracrylsäure-isopropylester-$d_8$,
2-Fluoracrylsäure-isopropylester-$d_9$,
2-Fluoracrylsäure-trifluorisopropylester-$d_6$,
2-Fluoracrylsäure-$d_2$-perfluor(-2,3-dimethyl-2-butyl)ester
2-Fluoracrylsäure-trifluor-tert.-butylester-$d_8$,
2-Fluoracrylsäure-trichlor-tert.-butylester-$d_8$
sowie wahlweise 2-Fluoracrylsäuremethylester-$d_6$ enthalten.

Als Mantelmaterialien können Copolymere eingesetzt werden die Monomereinheiten enthalten, die sich von Verbindungen der Formeln I, II und III ableiten. Besonders bevorzugt werden hierbei solche Materialien die einen relativ hohen Anteil an Monomereinheiten der Formel I, vorzugsweise 40 bis 85 Gew.-%, besonders bevorzugt 50 bis 80 Gew.-%, bezogen auf die Gesamtmenge des Polymers, aufweisen. Zur

Verwendung als Mantelmaterialien für die erfindungsgemäßen Lichtwellenleiter eignen sich insbesondere Polymere die Monomereinheiten enthalten, die sich von Fluoralkylestern, vorzugsweise von Trifluorethylestern, Pentafluorpropylestern und Hexafluorisopropylestern, oder von Perfluor-2,3-dimethyl-2-butylestern der 2-Fluoracrylsäure und der 2,3-Difluor-acrylsäure ableiten.

In einer weiteren bevorzugten Ausführungsform werden als Mantelmaterialien Copolymere eingesetzh, die Monomereinheiten enthalten, die sich von Tetrafluorethylen, von Perfluoralkyl-vinylethern sowie von (Perfluor-3-oxa-4-penten-1-carbonsäure)methylesterodervon(Perfluor-4-oxa-5-hexen-1-carbonsäure)-methylester oder von Perfluor (dimethyldioxol) ableiten.

Lichtwellenleiter aus den erfindungsgemäßen Polymeren besitzen eine außerordentlich gute Lichttransmission, so daß sie auch über den Wellenlängenbereich des sichtbaren Lichts hinaus, beispielsweise bei 850nm, eingesetzt werden können, so daß auch in solchen Wellenlängenbereichen noch große Übertragungslängen für Lichtsignale ermöglicht werden.

Aufgrund der hohen Dauergebrauchstemperaturen eignen sich Lichtwellenleiter aus den erfindungsgemäßen Materialien insbesondere für Bereiche, in denen hohe Temperaturanforderungen an die Materialien gestellt werden, wie beispielsweise in der Automobilindustrie.

Beispiele:

Beispiele 1 bis 3 und Vergleichsbeispiele V1 bis V4

Ein Gemisch aus 2-Fluoracrylsäurehexafluorisopropylester (Formel I, Bedeutung von $R^1$ und $R^2$ siehe Tabelle 1) und einem 2-Fluoracrylsäureester der Formel II (Bedeutung von $R^3$, $R^4$, $R^5$ und $R^6$ siehe Tabelle 1); die Summe der Monomere I und II ergibt 100 Gew.-%), wurde mit 0,005 Gew.-% tert.-Butylperoxyisopropylcarbonat, 0,005 Gew.-% tert.-Butylhydroperoxid und Butylmerkaptan versetzt und mittels eines Membranfilters (Porenweite 45 nm) filtriert und in ein partikelfrei gespültes Glasgefäß gefüllt.

Die Entgasung des Gemisches erfolgte durch Durchleiten von Heliumgas (20 Minuten), wobei der Sauerstoffpartialdruck über dem Gemisch auf ein Tausendstel des Sättigungswerts (unter Standardbedingungen) herabgesetzt wurde. Das Gemisch wurde in der Heliumatmosphäre auf -78 °C abgekühlt und evakuiert. Das Glasgefäß wurde danach abgeschmolzen und das Produkt zunächst für 15 h auf 65 °C, danach für 15 bis 35 h auf 90 °C erwärmt, bis die Masse glasig erstarrte. Anschließend wurde die Badtemperatur innerhalb von 10 h für weitere 24 h auf 140 °C erhöht. Nach dem Abkühlen des Reaktionsgemisches wurde ein glasklares Polymerisat erhalten, das die nachstehenden Eigenschaften (s. Tab. 1) aufwies.

Tabelle 1

| Beispiel | Zusammensetzung $MR^{1)}$: I : II (Gew.-%) | Struktur der Monomereinheiten $R^1$ $R^2$ $R^3$ $R^4$ $R^5$ | $R^6$ | Viskositätszahl (in ml/g) | Restmonomergehalt I in Gew.-% | Restmonomergehalt II in Gew.-% | Brechungsindex | Glasumwandlungstemp. in °C |
|---|---|---|---|---|---|---|---|---|
| 1 | 0,5: 30 : 70 | H H H H H | $CF_3$ | 89 | 0,01 | < 0,01 | 1,377 | 140 |
| 2 | 0,5: 60 : 40 | H H H H H | $CF_3$ | 76 | 0,08 | < 0,01 | 1,364 | 155 |
| 3 | 0,5: 85 : 15 | H H H H H | $CF_3$ | 55 | 0,1 | < 0,01 | 1,356 | 121 |
| 4 | 0,5: 40 : 60 | H H H H $CH_3$ | $CH_3$ | 60 | 0,02 | 0,25 | 1,366 | 121 |
| 5 | 0,33: 60 : 40 | H H H H $CH_3$ | $CH_3$ | 82 | 0,15 | 0,17 | 1,385 | 125 |
| 6 | 0,2: 70 : 30 | H H H H $CH_3$ | $CH_3$ | 120 | 0,1 | 0,05 | 1,397 | 121 |
| 7 | 0,8: 30 : 70 | H H H H H | $C_2F_5$ | 59 | 0,04 | < 0,01 | 1,365 | 129 |
| 8 | 0,5: 50 : 50 | H H H H H | $C_2F_5$ | 102 | 0,16 | < 0,01 | 1,361 | 142 |
| 9 | 0,3: 70 : 30 | H H H H H | $C_2F_5$ | 91 | 0,3 | 0,05 | 1,356 | 133 |
| Vergl.-Beisp. | | | | | | | | |
| V1 | 0,5: 100 : 0 | H H - - - | - | 49 | 0,2 | --- | 1,348 | 108 |
| V2 | 0,5: 0 : 100 | - - H H H | $CF_3$ | 110 | --- | 0,26 | 1,38 | 104 |
| V3 | 0,5: 0 : 100 | - - H H $CH_3$ | $CH_3$ | 88 | --- | 0,31 | 1,443 | 92 |
| V4 | 0,5: 0 : 100 | - - H H H | $C_2F_5$ | 103 | --- | 0,05 | 1,371 | 105 |

1) Konzentration des Molekulargewichtsreglers (MR) in Gew.-%
Beispiele 1 bis 3: Butylmerkaptan
Beispiele 4 bis 6: Butyldimerkaptan
Beispiele 7 bis 9: Ethylmerkaptoacetat
Vergleichsbeispiele V1 bis V4: Butylmerkaptan

Die Viskositätszahl (in ml/g) wurde an Lösungen des Polymeren (1 Gew.-%) in Essigester (99 Gew.-%) bei 25 ° C bestimmt.

Der Restmonomergehalt (bezogen auf 100 Gew.-% des Polymeren) wurde gaschromatographisch mit Hilfe eines inneren Standards an Lösungen von 5 Gew.-% des Polymerisats in 100 Gew.-% eines geeigneten Lösemittels bestimmt. Der Brechungsindex wurde mit Hilfe eines Abbe-Refraktometers an bis

zur Konstanz des Meßwertes getrockneten Gießfilmen, die aus Lösungen des Polymeren in einem geeigneten, niedrigsiedenden Lösemittel hergestellt worden waren, gemessen. Die Glasumwandlungstemperatur wurde mittels Differentialkalorimetrie (DSC) bei einer Aufheizrate von 20 ° C/min bestimmt.

Beispiele 4 bis 6

Ein Gemisch aus 2-Fluoracrylsäurehexafluorisopropylester (Formel I, Bedeutung von $R^1$ und $R^2$ siehe Tabelle 1) und 2-Fluoracrylsäureeisopropylester (Ester der Formel II, Bedeutung von $R^3$, $R^4$, $R^5$ und $R^6$ siehe Tabelle 1; die Summe von I und II ergibt 100 Gew.-%), wurde mit 0,005 Gew.-% tert.-Butylperoxyisopropylcarbonat, 0,005 Gew.-% tert.-Butylhydroperoxid und Butyldimerkaptan gemäß den Angaben in Tabelle 1 versetzt. Die weitere Behandlung dieses Gemisches erfolgte in einer Art und Weise, die den Angaben zu den Beispielen 1 bis 3 entspricht.

Beispiele 7 bis 9

Ein Gemisch aus 2-Fluoracrylsäurehexafluorisopropylester (Formel I, Bedeutung von $R^1$ und $R^2$ siehe Tabelle 1) und 2-Fluoracrylsäurepentafluor-n-propylester (Ester der Formel II, Bedeutung von $R^3$, $R^4$, $R^5$ und $R^6$ siehe Tabelle 1; die Summe von I und II ergibt 100 Gew.-%), enthielt, wurde mit 0,005 Gew.-% tert.-Butylperoxyisopropylcarbonat, 0,005 Gew.-% tert.-Butylhydroperoxid und Ethylmerkaptoacetat gemäß den Angaben in Tabelle 1 versetzt. Die weitere Behandlung dieses Gemisches erfolgte in einer Art und Weise, die den Angaben zu den Beispielen 1 bis 3 entspricht.

Vergleichsbeispiele V5 bis V8

Ein Gemisch aus 2-Fluoracrylsäure-methylester (Formel III, Bedeutung von $R^7$ und $R^8$ siehe Tabelle 2) und einem 2-Fluoracrylsäurealkylester der Formel II (Bedeutung von $R^3$. $R^4$, $R^5$ und $R^6$ siehe Tabelle 2), wurde mit 0,02 Gew.-% tert.-Butylperoxyisopropylcarbonat und 0,5 Gew.-% Buytlmerkaptan versetzt. Das Gemisch wurde, wie oben beschrieben, filtriert, abgefüllt und entgast und in einer abgeschmolzenen Glasampulle unter den oben angegebenen Bedingungen polymerisiert. Nach dem Abkühlen des Reaktionsgemisches wurde ein glasklares Polymerisat erhalten, das die nachstehenden Eigenschaften (s. Tab. 2) aufwies.

Die Viskositätszahl wurde anstatt in Essigester in Aceton bestimmt.

**Tabelle 2**

| Beispiel | Zusammensetzung III : II (Gew.-%) | Struktur der Monomereinheiten $R^3$ $R^4$ $R^5$ $R^6$ | $R^7$ $R^8$ | Viskositätszahl (in ml/g) | Restmonomergehalt III : II in Gew.-% | Brechungsindex | Glasumwandlungstemp. in °C |
|---|---|---|---|---|---|---|---|
| V5 | 30 : 70 | H H H $CF_3$ | H H | 165 | 0,03 0,14 | 1,402 | 121 |
| V6 | 50 : 50 | H H H $CF_3$ | H H | 162 | 0,12 0,09 | 1,415 | 125 |
| V7 | 70 : 30 | H H H $CF_3$ | H H | 168 | 0,10 0,05 | 1,434 | 131 |
| V8 | 100 : 0 | - - - - | H H | 182 | 0,02 -- | 1,461 | 141 |

Beispiel 10 und 11

Ein Gemisch aus 2-Fluoracrylsäure-hexafluorisoproylester (HIFA, Formel I mit $R^1$ und $R^2$ gleich Wasserstoff), 2-Fluoracrylsäure-trifluorethylester TEFA, Formel II mit $R^3$, $R^4$ und $R^5$ gleich Wasserstoff und

$R^6$ gleich Trifluormethyl) und 2-Fluoracrylsäuremethylester (MFA, Formel III mit $R^7$ und $R^5$ gleich Wasserstoff), das die drei Monomere nach Maßgabe der Tabelle 3, (Summe = 100 Gew.-%) enthielt, wurde mit 0,02 Gew.-% Di-tert.-butylperoxid und 0,5 Gew.-% Butylmerkaptan versetzt. Das Gemisch wurde wie oben beschrieben filtriert, abgefüllt und entgast und in einer abgeschmolzenen Glasampulle bei einer Badtemperatur von 85 °C wie unter Beispiel 1 angegeben polymerisiert. Danach wurde die Badtemperatur auf 140 °C erhöht. Nach dem Abkühlen des Reaktionsgemisches wurde ein glasklares Polymerisat erhalten, das die nachstehenden Eigenschaften (s. Tab. 3) aufwies.

Tabelle 3

| Beispiel | Zusammensetzung HIFA : TEFA : MFA (Gew.-%) | Viskositätszahl (in ml/g) | Restmonmergehalt HIFA TEFA MFA | Brechungsindex | Glasumwandlungstemp. in °C |
|---|---|---|---|---|---|
| 10 | 60 : 35 : 5 | 75 | 0,15 0,08 0,02 | 1,366 | 148 |
| 11 | 70 : 10 : 20 | 71 | 0,22 0,05 0,11 | 1,374 | 149 |

Beispiele 12 bis 15

Ein Gemisch aus 2-Fluoracrylsäurehexafluorisopropylester (Formel I, Bedeutung von $R^1$ und $R^2$ siehe Tabelle 4), einem weiteren 2-Fluoracrylsäurealkylester der Formel II (Bedeutung von $R^3$, $R^4$, $R^5$ und $R^6$ siehe Tabelle 4) und 2-Fluoracrylsäuremethylester (MFA, Formel III, Bedeutung von $R^7$ und $R^8$ siehe Tabelle 4; die Summe der drei Monomere ergibt 100 Gew.-%) wurde mit 0,02 Gew.-% Azo-bis(2,4,4-trimethylpentan-2),0,005 Gew.-% tert.-Butylhydroperoxid und 0,5 Gew.-% Butylmerkaptan versetzt und mittels eines Mebranfilters (Porenweite 45 nm) filtriert und in ein partikelfrei gespültes Glasgefäß gefüllt. Das Gemisch wurde entgast, indem das Gemisch für die Dauer von 40 min mit Argongas durchperlt wurde, wobei der Sauerstoffpartialdruck über dem Gemisch auf ein Tausendstel des Sättigungswerts (unter Standardbedingungen) herabgesetzt wurde. Das Gemisch wurde in einer Argonatmosphäre auf -78 °C abgekühlt und evakuiert. Das Glasgefäß wurde danach abgeschmolzen und das Produkt zunächst für 15 bis 35 h auf 85 °C erwärmt, bis die Masse in der Ampulle glasig erstarrte. Anschließend wurde die Badtemperatur für weitere 24 h auf 145 °C erhöht. Nach dem Abkühlen des Reaktionsgemisches wurde ein glasklares Polymerisat erhalten, das die nachstehenden Eigenschaften (siehe Tabelle 4) aufwies.

Tabelle 4

| Beispiel | Zusammensetzung I:II:III (Gew.-%) | Struktur $R^1$ | $R^2$ | $R^3$ | $R^4$ | $R^5$ | $R^6$ | $R^7$ | $R^8$ | Viskositätszahl (in ml/g) | Restmonomergehalt (Summe, in Gew.-%) | Brechungsindex | Glasumwandlungstemp. in °C |
|---|---|---|---|---|---|---|---|---|---|---|---|---|---|
| 12 | 65:20:15 | D | H | D | H | H | $CF_3$ | D | H | 73 | 0,22 | 1,371 | 149 |
| 13 | 65:20:15 | D | D | D | H | H | $CF_3$ | D | D | 72 | 0,28 | 1,371 | 149 |
| 14 | 65:20:15 | D | D | D | D | D | $CF_3$ | D | D | 73 | 0,23 | 1,373 | 151 |
| 15 | 50: 5:45 | D | D | D | D | $CD_3$ | $CD_3$ | D | D | 83 | 0,35 | 1,398 | 145 |

Beispiel 16

10 kg Methylethylketon und 5 kg 2,3-Difluoracrylsäurehexafluorisopropylester wurden mit 12.5 g Azobisisobutyronitril (AIBN) versetzt, mit Stickstoffgas durchperlt und 48 h bei 60 °C in einer Stickstoffatmosphäre gerührt. Das Produkt wurde anschließend in Benzin (Siedebereich 60 bis 80 °C) gefällt und mittels eines Filters gesammelt. Das Produkt wurde anschließend bis zur Gewichtskonstanz getrocknet und wies folgende Eigenschaften auf:

| | |
|---|---|
| Ausbeute:<br>Glasumwandlungstemperatur:<br>Brechungsindex: | 91%<br>95 °C<br>1.341 |
| Viskositätszahl (1 Gew.-% in 100 Gew.-% Essigester, 25 °C) 38 ml/g | |

Beispiel 17

Teflon AF 1600, ein Handelprodukt der Fa. DuPont, bestehend aus Tetrafluorethylen und Perfluor(dimethyldioxol), wurd mit 100 kGy $\gamma$-Strahlung aus einer $^{60}$Co-Quelle bestrahlt. Danach wurde das Polymer bei 250 °C im Vakuum thermisch nachbehandelt. Die Viskositätszahl (0,5 % in Hostinert 272, einem Handelsprodukt der Hoechst AG, als Lösemittel bei 70 °C) nahm durch diese Behandlung von 90 ml/g auf 27 ml/g ab.

Beispiel 18

Ein Polymerisat, das nach den Angaben in Beispiel 2 hergestellt worden war, wurde in einem Kolbenextruder aufgeschmolzen und zum Kern eines Lichtwellenleiters extrudiert. Das Polymerisat nach Beispiel 16 wurde in einen Doppelschneckenextruder mit Entgasungszone eingespeist und zum Mantel des Lichtwellenleiters verarbeitet. Die Eigenschaften des Lichtwellenleiters werden in Tabelle 5 beschrieben.

Beispiel 19

Ein Polymerisat, das nach den Angaben in Beispiel 8 hergestellt worden war, wurde in einem Kolbenextruder aufgeschmolzen und zum Kern eines Lichtwellenleiters extrudiert. Ein Polymer, das nach den Angaben in Beispiel 17 hergestellt worden war, wurde in einem Kolbenextruder aufgeschmolzen, zusammengesintert und zum Mantel des Lichtwellenleiters verarbeitet. Die Eigenschaften des Lichtwellenleiters werden in Tabelle 5 beschrieben.

Beispiel 20

Ein Polymerisat, das nach den Angaben in Beispiel 12 hergestellt worden war, wurde in einem Kolbenextruder aufgeschmolzen und zum Kern eines Lichtwellenleiters extrudiert. Ein Copolymerisat, das sich zu 68 Gew.-% vom Tetrafluorethylen und zu 32 Gew.-% vom Perfluorpropylvinylether (Schmelzindex: 13g/10 min bei 230 °C, 3,8 kg Auflagegewicht) ableitet, wurde in einen Doppelschneckenextruder mit Entgasungszone eingespeist und zum Mantel des Lichtwellenleiters verarbeitet. Die Eigenschaften des Lichtwellenleiters werden in Tabelle 5 beschrieben.

Beispiel 21

Ein Polymerisat, das nach den Angaben in Beispiel 13 hergestellt worden war, wurde in einem Kolbenextruder aufgeschmolzen und zum Kern eines Lichtwellenleiters extrudiert. Ein Copolymerisat, das sich zu 68 Gew.-% vom Tetrafluorethylen und zu 32 Gew.-% vom Perfluorpropylvinylether (Schmelzindex: 13 g/10 min bei 230 °C; 3,8 kg Auflagegewicht) ableitet, wurde in einen Doppelschneckenextruder mit Entgasungszone eingespeist und zum Mantel des Lichtwellenleiters verarbeitet. Die Eigenschaften des Lichtwellenleiters werden in Tabelle 5 beschrieben.

Beispiel 22

Ein Polymerisat, das nach den Angaben in Beispiel 14 hergestellt worden war,wurde in einem Kolbenextruder aufgeschmolzen und zum Kern eines Lichtwellenleiters extrudiert. Ein Copolymerisat, das sich zu 68 Gew.-% vom Tetrafluorethylen und zu 32 Gew.-% vom Perfluorpropylvinylether(Schmelzindex: 13g/10 min bei 230 °C; 3,8 kg Auflagegewicht) ableitet, wurde in einen Doppelschneckenextruder mit

Entgasungszone eingespeist und zum Mantel des Lichtwellenleiters verarbeitet. Die Eigenschaften des Lichtwellenleiters werden in Tabelle 5 beschrieben.

Beispiel 23

Ein Polymerisat, das nach den Angaben in Beispiel 15 hergestellt worden war, wurde in einem Kolbenextruder aufgeschmolzen und zum Kern eines Lichtwellenleiters extrudiert. Ein Polymerisat, das nach den Angaben in Beispiel 3 hergestellt worden war, wurde in einem Kolbenextruder aufgeschmolzen und zum Mantel des Lichtwellenleiters verarbeitet. Die Eigenschaften des Lichtwellenleiters werden in Tabelle 5 beschrieben.

Beispiel 24

Ein Polymersiat, das nach den Angaben in Beispiel 11 hergestellt worden war, wurde in einem Kolbenextruder aufgeschmolzen und zum Kern eines Lichtwellenleiters extrudiert. Ein Copolymerisat, das sich zu 60 Gew.-% vom Tetrafluorethylen, zu 34 Gew.-% vom Perfluorpropylvinylether und zu 6 Gew.-% vom (Perfluor-3-oxy-4-penten-1-carbonsäure) methylester (Schmelzindex: 13 g/10 min bei 230 °C; 3,8 kg Auflagegewicht) ableitet, wurde in einen Doppelschneckenextruder mit Entgasungszone eingespeist und zum Mantel des Lichtwellenleiters verarbeitet. Die Eigenschaften des Lichtwellenleiters werden in Tabelle 5 beschrieben.

Tabelle 5

| Beispiel | Dämpfung 650 nm dB/km | Dämpfung 830 nm dB/km | Dämpfung bei 650 nm nach 2 h Wärmeschrank dB/km | °C | Dämpfung bei 650 nm nach Biegetest in dB/km |
|---|---|---|---|---|---|
| 18 | 50 | | 55 | 110 | 90 |
| 19 | 45 | | 54 | 110 | 48 |
| 20 | 44 | 129 | 70 | 110 | 61 |
| 21 | 30 | 84 | 46 | 110 | 52 |
| 22 | 25 | 37 | 51 | 110 | 40 |
| 23 | 27 | 35 | 39 | 110 | 40 |
| 24 | 55 | | 58 | 110 | 65 |

Die Dämpfung wurde an 30 m langen Stücken der Lichtwellenleiter dadurch bestimmt, daß Licht einer Wellenlänge (650 nm, 830 nm) vom einen Ende des Lichtwellenleiters eingekoppelt und die Lichtintensität am anderen Ende in Abhängigkeit von der Länge des Lichtwellenleiters, der nach jeder Messung um eine bestimmte Länge verkürzt wurde, gemessen wurde. Aus einer logarithmischen Auftragung der Lichtintensitäten gegen die Länge des Lichtwellenleiters in km, ergibt sich die Dämpfung D als Steigung gemäß folgender Formel:

$$D = \frac{10}{L_1 - L_2} \log \frac{I_{(L1)}}{I_{(L2)}}$$

$L_1$ = Länge des ungekürzten Lichtwellenleiters
$L_2$ = Länge des verkürzten Lichtwellenleiters
$I_{(L)}$ = transmittierte Lichtintensität in Abhängigkeit von der Länge des Lichtwellenleiters.

Zur Prüfung der Wärmebeständigkeit wurde je ein Abschnitt des Lichtwellenleiters in normaler Umgebungsluft zwei Stunden bei den angegebenen Temperaturen gelagert und anschließend die Dämpfung gemessen. Zur Prüfung der Biegefestigkeit ("Biegetest") wurde ein 20 m langer Lichtwellenleiter (Durchmesser 0,5 mm) in die Dämpfungsmeßeinrichtung eingespannt, die Dämpfung bestimmt und ein 150 cm langer Abschnitt dieses Lichtwellenleiters (L = 150) um einen Stab von 30 mm Durchmesser gewunden. Der Lichtwellenleiter wurde wieder vom Stab gelöst und gerade ausgerichtet. Danach wurde die transmittierte Lichtintensität erneut gemessen und die Erhöhung der Dämpfung infolge der Deformation des Lichtwellenleiters ($D_{Def}$), ausgedrückt in dB/km, zur Dämpfung des ungeschädigten Lichtwellenleiters hinzugezählt.

$$D_{Def} = \frac{10}{L} \cdot \log \frac{I_{vorher}}{I_{nachher}}$$

$I_{vorher}$ = transmittierte Lichtintensität vor der Deformation
$I_{nachher}$ = transmittierte Lichtintensität nach der Deformation

**Patentansprüche**

**1.** Transparente thermoplastische Formmasse, aus einem Polymeren enthaltend

a) 10 bis 95 Gew.% an Einheiten, die sich von einer Verbindung der Formel (I) ableiten

$R^1{}_2C = CF\text{-}COO\text{-}C(CF_3)_2\ R^2$ (I)

worin
$R^1$ und $R^2$ gleich oder verschieden sind und ein Wasserstoff-, Deuteriumaton, oder Fluoratom bedeuten,

b) 90 bis 5 Gew.-% an Einheiten, die sich von einer oder mehreren Verbindungen der Formel (II) ableiten

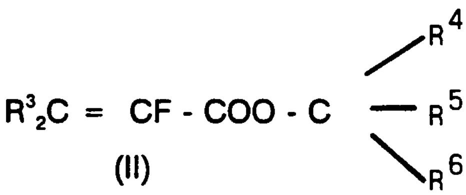

(II)

worin
$R^3$ ein Wasserstoff-oder Deuteriumatom ist, $R^4$ und $R^5$ gleich oder verschieden sind und ein Wasserstoff- oder Deuteriumatom, eine Methyl- oder Mono-, Di- oder Trideuteromethylgruppe oder eine Trifluor- oder Trichlormethylgruppe bedeuten; $R^6$ eine Methyl-, Mono-, Di- oder Trideuteromethyl- oder Trifluormethylgruppe, eine Phenylgruppe, eine Pentafluorphenylgruppe, eine Mono-, Di- oder Trihalogen-phenylgruppe, eine Mono-, Di-oder Tri(perfluor-$C_1$ bis $C_3$-alkyl)-phenylgruppe oder eine $CF_3\text{-}CHF\text{-}CF_2\text{-}CH_2$-Gruppe eine $(CF_3)_3C$-Gruppe oder eine X $(CF_2)_n\text{-}(CH_2)_m$-Gruppe in der X für ein Wasserstoff-, Deuterium-, Fluor-oder Chloratom steht und n eine ganze Zahl von 2 bis 4 und m gleich 0 oder 1 ist,

c) 0 bis 85 Gew.-% an Einheiten, die sich von einer Verbindung der Formel (III) ableiten

$R^7{}_2C = CF - COO - CR^8{}_3$ (III)

worin
$R^7$ und $R^8$ gleich oder verschieden sind und ein Wasserstoff- oder Deuteriumatom bedeuten, wobei die Summe von (II) und (III) bezogen auf die Gesamtmenge des Polymers im Bereich von 5 bis 90 Gew.-% liegt.

2. Formmasse nach Anspruch 1, dadurch gekennzeichnet, daß die Glasumwandlungstemperatur über 130 ° C liegt.

3. Formmasse nach Anspruch 1, dadurch gekennzeichnet, daß die Reste $R^1$, $R^3$ und $R^7$ jeweils ein Deuteriumatom bedeuten.

4. Verwendung der Formmasse gemäß Anspruch 1 für optische Gegenstände.

5. Lichtwellenleiter mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M)> 1,01 ist, dadurch gekennzeichnet, daß der Kern des Lichtwellenleiters aus einer Formmasse aus einem Polymeren enthaltend
   a) 10 bis 95 Gew.% an Einheiten, die sich von einer Verbindung der Formel (I) ableiten

   $R^1{}_2C=CF\text{-}COO\text{-}C(CF_3)_2\text{-}R^2$ (I)

   worin
   $R^1$ und $R^2$ gleich oder verschieden sind und ein Wasserstoff-, Deuteriumaton, oder Fluoratom bedeuten,
   b) 90 bis 5 Gew.-% an Einheiten, die sich von einer oder mehreren Verbindungen der Formel (II) ableiten

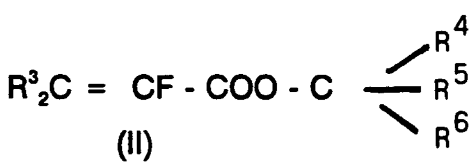

(II)

   worin
   $R^3$ ein Wasserstoff- oder Deuteriumatom ist, $R^4$ und $R^5$ gleich oder verschieden sind und ein Wasserstoff- oder Deuteriumatom, eine Methyl- oder Mono-, Di- oder Trideuteromethylgruppe oder eine Trifluor- oder Trichlormethylgruppe bedeuten; $R^6$ eine Methyl-, Mono-, Di- oder Trideuteromethyl- oder Trifluormethylgruppe, eine Phenylgruppe, eine Pentafluorphenylgruppe, eine Mono-, Di- oder Trihalogenphenylgruppe, eine Mono-, Di- oder Tri(perfluor-$C_1$ bis $C_3$-alkyl)-phenylgruppe oder eine $CF_3\text{-}CHF\text{-}CF_2\text{-}CH_2$-Gruppe eine $(CF_3)_3C$-Gruppe oder eine X $(CF_2)_n\text{-}(CH_2)_m$-Gruppe in der X für ein Wasserstoff-, Deuterium-, Fluor-oder Chloratom steht und n eine ganze Zahl von 2 bis 4 und m gleich 0 oder 1 ist,
   c) 0 bis 85 Gew.-% an Einheiten, die sich von einer Verbindung der Formel (III) ableiten

   $R^7{}_2C = CF - COO - CR^8{}_3$ (III)

   worin
   $R^7$ und $R^8$ gleich oder verschieden sind und ein Wasserstoff- oder Deuteriumatom bedeuten, wobei die Summe von (II) und (III), bezogen auf die Gesamtmenge des Polymers, im Bereich von 5 bis 90 Gew.-% liegt, besteht.

6. Lichtwellenleiter nach Anspruch 5, dadurch gekennzeichnet, daß der Mantel aus einem Polymer besteht, welches Einheiten enthält, die sich von Fluoralkylestern der 2-Fluoracrylsäure ableiten.

7. Lichtwellenleiter nach Anspruch 5, dadurch gekennzeichnet, daß der Mantel aus einem Polymer besteht, welches Einheiten enthält, die sich von Fluoralkylestern der 2,3-Difluoracrylsäure ableiten.

8. Lichtwellenleiter nach Anspruch 5, dadurch gekennzeichnet, daß der Mantel Polymere enthält, die sich von 2-Fluoracrylsäurehexafluorisopropylester ableiten.

9. Lichtwellenleiter nach Anspruch 5, dadurch gekennzeichnet, daß der Mantel aus einem Copolymeren besteht, welches Einheiten enthält, die sich von Tetrafluorethylen, von Perfluoralkylvinylethern oder von

(Perfluor-3-oxa-4-penten-1-carbonsäure) methylester, (Perfluor-4-oxa-5-hexen-1-carbonsäure)-methylester oder von Perfluor (dimethyldioxol) ableiten.

**10.** Lichtwellenleiter nach Anspruch 5, dadurch gekennzeichnet, daß der Mantel aus einem Copolymeren besteht, welches Einheiten enthält, die sich von Tetrafluorethylen und von Perfluor(dimethyldioxol) ableiten.

Europäisches Patentamt

# EUROPÄISCHER RECHERCHENBERICHT

Nummer der Anmeldung

EP 92 10 3191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 438 170 (MITSUBISHI RAYON)<br>* Ansprüche *<br>--- | 1-10 | C 08 F 220/24<br>G 02 B 1/04 |
| Y | WO-A-9 012 044 (HOECHST)<br>* Ansprüche *<br>--- | 1-10 | |
| Y | WO-A-9 012 040 (HOECHST)<br>* Ansprüche *<br>--- | 1-10 | |
| D,A | EP-A-0 128 517 (DAIKIN KOGYO)<br>----- | 1-10 | |

RECHERCHIERTE SACHGEBIETE (Int. Cl.5)

C 08 F
G 02 B

Der vorliegende Recherchenbericht wurde für alle Patentansprüche erstellt

| Recherchenort | Abschlußdatum der Recherche | Prüfer |
|---|---|---|
| DEN HAAG | 27-05-1992 | ANDRIOLLO G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)